Europäisches Patentamt

(19) European Patent Office

Office européen des brevets

(11) Publication number: **0 401 214 B1**

# (12) EUROPEAN PATENT SPECIFICATION

(45) Date of publication of patent specification:
25.09.91 Bulletin 91/39

(21) Application number: **88903345.2**

(22) Date of filing: **25.03.88**

(86) International application number:
**PCT/IT88/00021**

(87) International publication number:
**WO 89/07061 10.08.89 Gazette 89/18**

(51) Int. Cl.⁵: **B60P 1/00, B62D 33/04, A47B 96/02**

## (54) SHELVING WITH ADJUSTABLE SHELVES PARTICULARLY SUITABLE FOR GOODS VANS.

(30) Priority: **08.02.88 IT 2060688 U**

(43) Date of publication of application:
**12.12.90 Bulletin 90/50**

(45) Publication of the grant of the patent:
**25.09.91 Bulletin 91/39**

(84) Designated Contracting States:
**AT BE CH DE FR GB LI LU NL SE**

(56) References cited:
**EP-A- 93 814**
**FR-A- 2 341 455**
**US-A- 3 086 256**
**US-A- 3 649 072**

(73) Proprietor: **MAGISTRELLI, Maurizio**
**Via Statale 11 n. 27**
**I-20010 Vittuone (IT)**

(72) Inventor: **MAGISTRELLI, Maurizio**
**Via Statale 11 n. 27**
**I-20010 Vittuone (IT)**

(74) Representative: **Filippi, Remo**
**Via Aldrovandi, 5**
**I-20129 Milano (IT)**

## Description

The present invention concerns shelving, especially for motor vehicles, comprising one or more fixed or moveable shelves on which objects or goods of various kinds can be placed.

By means of shelves set at different heights, a great quantity of objects can be arranged or stored within a small space, the same quantity requiring much more space if laid out on a single plane.

Most goods vehicles generally have only one loading platform consisting of the floor of the vehicle. It follows that the goods have to be piled up with consequent risk of deterioration especially if subjected to bumping or shaking due to the vehicle's movements.

If some of the goods have to be unloaded at an initial delivery point, those placed on top must first be removed. To avoid doing so, loading must be carefully planned putting in last those items to be unloaded first.

This creates problems both as regards placing the goods in the best way and also the time taken in loading and unloading, and in making out a loading plan.

EP-A-0093814 discloses a vehicle for transport of goods comprising a supplementary shelf that can be taken apart and put together, made of rectangular sections mounted with their long sides placed one against another.

Said sections slide on rolling means inside lateral guides fixed to the sides of the space used for carrying goods. The guides can be mounted at various heights fixed to uprights by supporting means.

As the supplementary shelf is composed of moveable sections, said shelf need only be put up when actually required, namely when the height and quantity of the goods allow it, or when an extra shelf is useful.

If the height of the goods makes it necessary, or if there is a lesser quantity, the supplementary shelf can be taken down.

The utility of the above described invention is, however, to some extent diminished by having to put up or take down all the shelf sections one by one, and by the space such sections occupy when out of use.

Fixing the shelf sections into the lateral guides requires extra work and if jerky movements made by the vehicle or a rough surface shakes the shelf sections out of their support, the goods may be damaged especially if fragile.

The disadvantages would obviously become greater if there were more than one supplementary shelf since the resulting operational complexities might, in such cases, make the invention itself impracticable.

These factors place limits on the use of the invention and difficulties might arise if loading and unloading of vehicles needs to be done as quickly and simply as possible. The invention subject of the present application not only avoids the above drawbacks but offers additional advantages as will be explained below.

Subject of the invention is a shelving arrangement with adjustable shelves specially designed or goods-carrying vehicles consisting of a set of rectangular components placed side by side lengthwise.

Shelf width is supported at each end by two lateral parallelogram supports each comprising a series of X-shaped bars in pairs.

The two bars of each pair are articulated centrally at their crossing point while their ends are articulated onto the ends of the adjacent pairs of X-shaped bars. Each rectangular component is fixed at its two ends to one of the two reciprocally parallel bars of each pair.

The lower extremities of the first X-bars of each of the two parallelogram devices are articulated on sliders freely moving along two horizontal guide rods while the lower extremities of the last X-bars of said devices are articulated on supports fixed to said guide rods.

It follows that when the sliders lie at the minimum distance from the fixed supports, all the pairs of X-bars, and thus all the rectangular components, are standing in a practically vertical position one up against another, leaving substantially free the space intended for that piece of shelving while, by drawing the rectangular components outwards or even pulling the front bar connecting the sliders outwards, the pairs of X-bars will become inclined until they assume a practically horizontal position.

On completing the movement, the rectangular components will be lying horizontally one against another and, by means of the pairs of X-bars, will be practically resting on the guide rods thus forming an almost continuous shelf of the shelving. The space occupied by said shelf can obviously be once more left free by pushing the horizontal components or else the front bar connecting the sliders towards the inside of the shelving.

The guide rods of the horizontal components are supported at the two ends by pairs of uprights each coinciding with one corner of the shelving. Said guide rods can be translated vertically, guided at their two ends by two columns that stand inside the uprights and penetrate into holes in said guide rods.

The guide rods can be locked in position by horizontal pins that translate freely inside closed horizontal slots cut in the ends of said guide rods. Said slots allow movement of the pins between the position nearest to the outside, where said pins can match with the open upward-sloping slots of the uprights, and the inner position which is the point of release of the pins from said open slots in the uprights and therefore the point of release

2

of said guide rods. It is thus possible to move the shelves from one level to the next in a set of open-ended slots cut one above another in said uprights.

One longitudinal side of each rectangular component is made practically like a channel while the other side is made practically like a tongue being free below and laterally.

The space between said channel and said tongue is such that when the rectangular components are placed horizontally the tongue of one component enters the channel of the adjacent one forming a firm connection between one component and the next.

In one execution the lateral parallelogram devices have an intermediate slider, moving along both guide rods. In this way, by releasing the upper articulations between the pair of X-bars upstream of said intermediate slider and the pair of X-bars downstream of said intermediate slider, the upstream components lie horizontally and are ready for loading, and the downstream components stand vertically in the out-of-use position, or else the contrary.

A free volume can thus be created in place of about half the shelving so that the amount of shelving used can be adapted to the quantity and type of goods or else to facilitate access to the upper and lower shelves for loading and unloading.

Characteristics and purposes of the invention will be made still clearer by the following examples of its execution illustrated by diagrammatic drawings.

Fig. 1.  The shelving subject of the invention, with one shelf, mounted in a van, ready for loading, in perspective from the back.

Fig. 2.  The same as above with half the shelf ready for loading and half in the out-of-use position.

Fig. 3.  Detail, in perspective, of the parallelogram device of the shelving.

Fig. 4.  Detail, in perspective, of one upright.

Fig. 5.  Detail, in perspective, of the shelf ready for loading.

Fig. 6.  Detail, from the front, of the bars of the parallogram device.

Fig. 7.  Detail, from the side, of the rectangular components of a shelf.

The shelving (12) comprises two pairs of uprights (13), (14) to fix to the inner sides of the loading volume (11) inside the van (10), said uprights being made of U-shaped metal sheeting, closed at the top end by a cap (15) and at the bottom end by the cap (16).

By means of the holes (17), (18) made in them, said caps can hold the cylindrical columns (19), (20) in position.

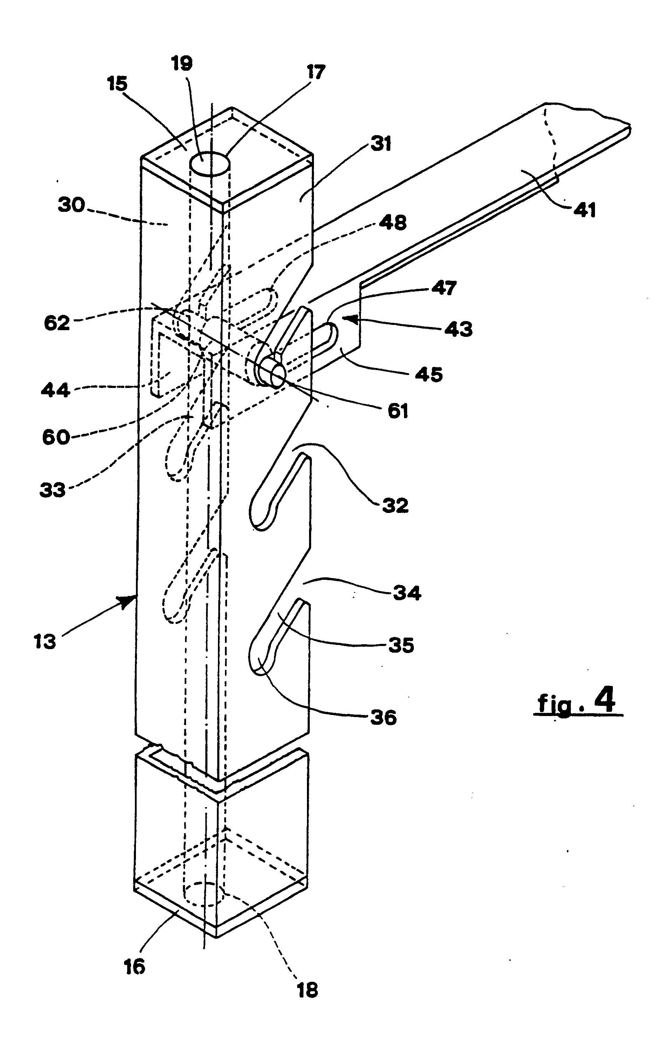

In sides (30), (31) of the uprights (Fig. 4.) there is a series of open-ended slots (32), (33) each slot having a mouth (34), a downward inclined section (35) and a rounded base (36). Said uprights support horizontal L-shaped cross bars (40), (41) having U-shaped downward-facing end pieces (42), (43) formed by the side sections (44), (45).

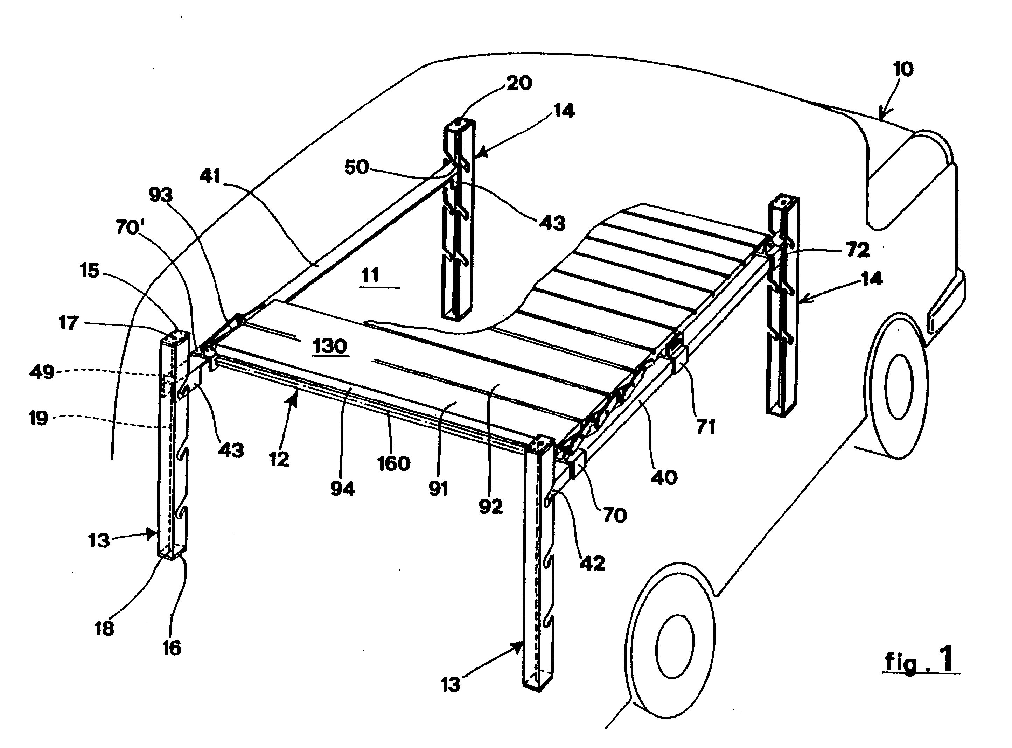

Said side sections comprise the horizontal aligned and parallel closed slots (47), (48),whose width is substantially the same as that of the slots (32), (33) in the uprights, within which can move the horizontal pin (60) comprising two cylindrical ends (61), (62) of a diameter slightly smaller than the width of the slots. In the end pieces (42),(43) of the cross bars (40), (41) there are holes (49), (50) through which the columns (19), (20) in the uprights can pass (Fig. 1).

As will be seen in Fig. 4, the extremities (61), (62) of the pins (60) can enter one or other of the pairs of open slots (32), (33) through the mouths (34) and fit down into the rounded base (36).

To raise or lower the cross bars (40), (41), the pins (60) have merely to be detached from the open slots moving said cross bars upwards. The extremities (61), (62) of pins (60) will then ease out from the open slots and can be fitted into another pair of slots either higher or lower in the uprights.

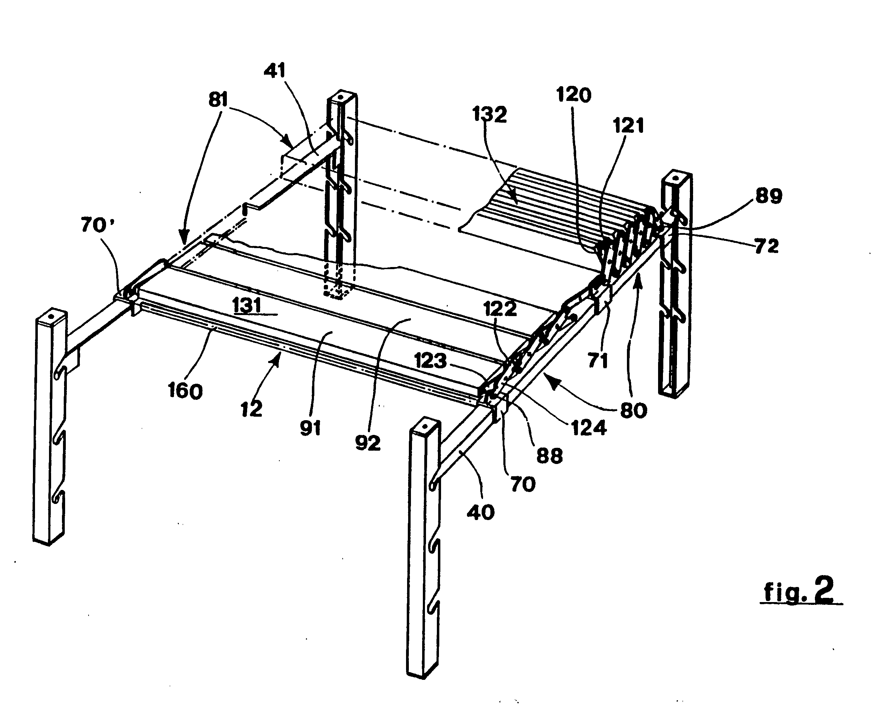

By means of sliders (70), (70') and fixed supports (72), the pair of cross bars (40), (41) respectively support the extremities (88) and (89) of the opposing and aligned parallelogram devices (80), (81) (Fig. 2).

Said devices are obtained from a series of X-bars (82), (83) freely articulating at their central crossing point by pins (90), (90').

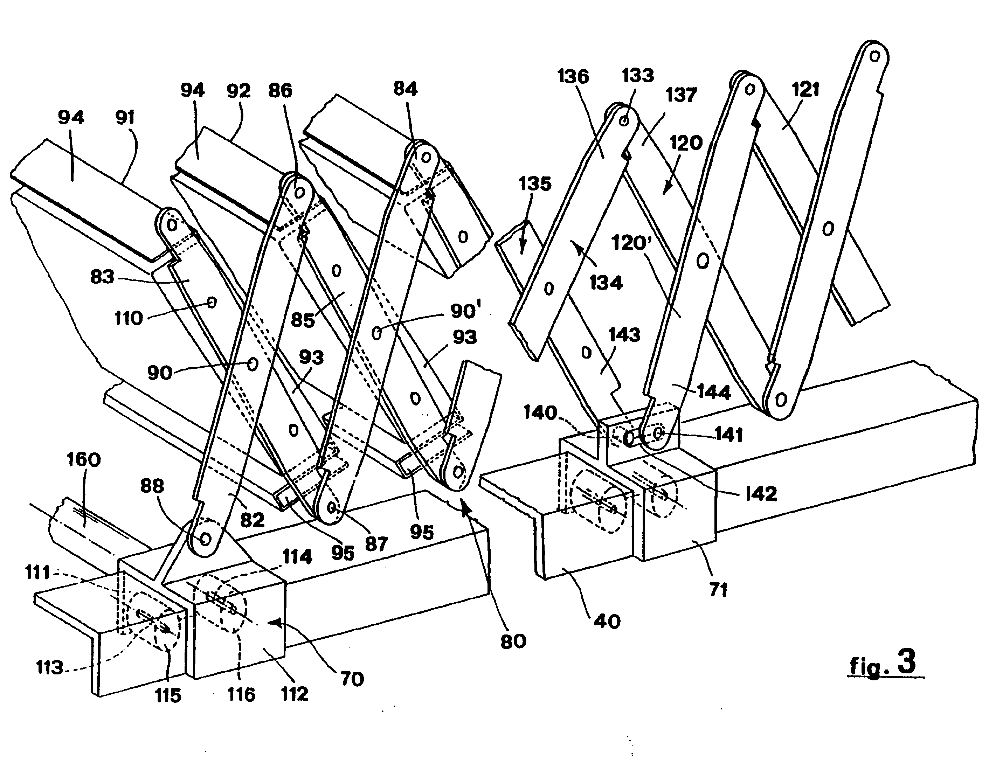

Each pair of bars (82), (83) is connected to another identical pair (84), (85) by the end articulations (86), (87). Each bar (83), (85) and others identical to it, comprised in the opposite device (81), support the rectangular components (91), (92) (Figs. 2, 3).

Said components comprise the transversal sides (93) and longitudinal sides (94), (95).

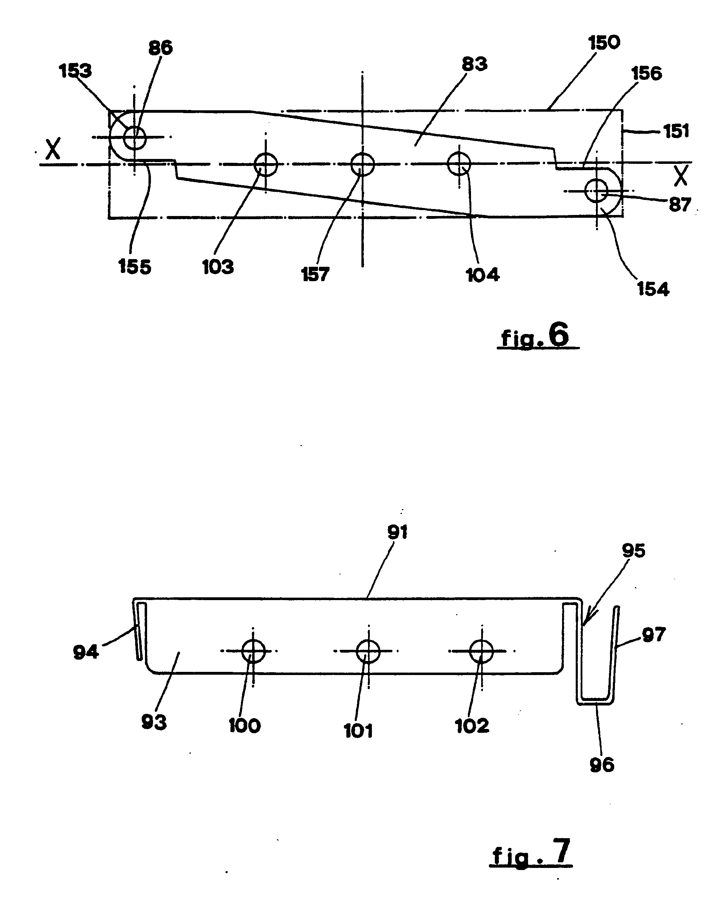

In sides (93) there are three holes (100),(101),(102) ; (Fig. 7).

Side (94) consists of a continuous tongue set slightly away from the transversal sides.

The opposite side (95) consists of a U-shaped tongue comprising the bottom (96) and the side (97).

Each component is fixed to the bars (83), (85) by rivets (110) through holes (100), (102) in the transversal

3

sides (93), and through the corresponding holes (103), (104) in the bars (Figs. 3, 6).

The position of the U-shaped sides (94), (95) corresponds to that of the articulations (86), (87) on the pairs of bars (82), (83), (84), (85) (Figs. 3, 5, 6, 7).

The sliders (70) moving along the guide rods (40),(41), consist of a U-shaped body with sides (111), (112).

Pins (113), (114) are fixed to sides (111) ; said pins are for rotating rollers (115), (116) counterposed to the central part of the U-shaped body to allow the sliders to move freely along the horizontal part of the relative guide rod. As the sliders (70), (71) approach the fixed support (72) the pairs of bars (82-83), (84-85) (Fig. 3) will obviously tend to line up perpendicular to the cross bars until they have assumed the position held by the bars (120), (121) seen in Fig. 2.

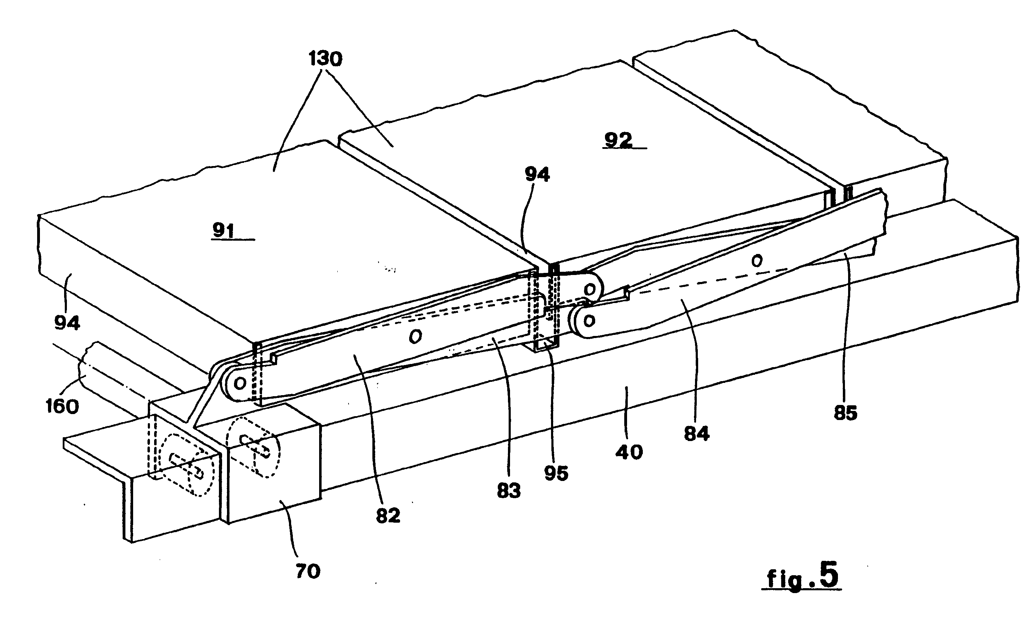

When the sliders (70), (71) move away from the fixed support (72) the pairs of bars (82-83), (84-85) will tend to align themselves parallel to the guide rod as seen in Fig. 5, and also as shown by bars (122),(123) in Fig. 2.

Once the position illustrated in these Figures is reached the side (94) of each rectangular component (92) penetrates into the U-shaped side (95) of an adjacent rectangular component (91) until a continuous shelf (130) is formed (Figs. 1, 2, 5).

The intermediate slider (71) of cross bar (40), and obviously the corresponding one on cross bar (41), will be placed between slider (70) and the support (72) should it be desired to divide the shelf into two separate parts (131), (132) (Fig. 2).

To obtain the two indedendent parts, the pins (133) (Fig. 3) must simply be detached from their positions in the holes in bars (134) and (120) of device (80), and in those of device (81) on the opposite side of the shelves (Fig. 2) leaving free the extremities (136), (137) of said bars (134), (120) (Fig. 3).

By moving the slider (71) close to the support (72) (Fig. 2) it is then possible to keep the rectangular components (132) standing vertically in the out-of-use position to leave loading volume free and, by moving slider (70) away from slider (71) obtain the loading surface (131).

By keeping the bars (134), (120) articulated at (133), with sliders (70) and (71) moving freely on the cross bar, a single load surface (130) can be formed (Fig. 1) or else, if desired, the rectangular components (91), (92) can be grouped vertically close up together.

In Fig. 3 the slider (71) has the two articulations (140), (141) free in slot (142) to avoid interference between the two ends (143), (144) of bars (135), (120) in the positions shown in Fig. 2 (shelf (131) ready for loading and shelf (132) vertical in the out-of-use position).

Fig. 6 shows in more detail the shape of each bar (83) of parallelogram devices (80), (81). Said bars are inscribed within a rectangle whose sides are (150) and (151).

The eyelets (153), (154) lie substantially at one end and the other end of the axis XX so that, in the space left free by each eyelet above and below the axis XX, there is room for fitting the eyelet of a second bar (85) that supports the component (92) adjacent to component (91) supported by the first bar (83) as will be seen in Fig. 3 and 5.

On said axis XX there are holes (103), (104) in bar (83) corresponding to holes (100) and (102) in the transversal sides (93) of the rectangular componente (91), also the hole (157) for articulation with the pair of bars (82) matching with hole (101) in the side (92) of said components. To ensure simultaneous and integral operation, slider (70) and slider (70') mounted on guide rod (41), are connected by a tubular bar (160) (Figs. 1, 2, 3).

## Advantages

These are evident. The uprights fixed in the loading space of the van take up very little room when the shelves are folded up in the out-of-use position.

The height of each shelf can be varied as required using one or other of the sets of slots in the uprights made at different heights.

Each shelf can be divided into two separate parts ; in this way, for example, half the loading volume can be left almost entirely free.

The easy change-over of each shelf from the loading position to being out of use means that packages as tall as the available height inside the van can be loaded, or else smaller ones placed on the various shelves.

The fact that the shelves can be set back in the out-of-use position facilitates unloading of goods placed on the lower shelves.

This is especially convenient when dealing with fragile goods and when loading or unloading has to be done at different times.

Considering the advantages offered by the invention and the simplicity in using it, the cost is very reasonable.

## Claims

1. Shelving (12) especially for goods-carrying motor vehicles (10) with adjustable shelves (130) consisting of a set of rectangular components (91) (92) placed lengthwise side by side, characterized in that said components (91) (92) are supported at their two ends by two parallelogram shaped devices (80) (81) made from two sets of X-shaped paired bars (82-83), (123-124) (134-135) with central articulations (90), (90') at their meeting point, also with end articulations (86), (87) made with the ends of the adjacent pair of X-shaped bars (84-85), (120-120'), each rectangular component (91-92) being fixed to one (83), (85), (120), (121), (122), (123) of the reciprocally parallel bare of each pair, the lower end of the external bar (82) of the first X-shaped pair (82-83) of each of the two parallelogram devices (80-81) articulating on a slider (70), (70') free to move along a horizontal guide rod (40), (41), while the lower end of the inner second bar (89) of the X-shaped pair of said devices (80), (81) articulates on a fixed support (72) mounted on said guide rod (40), (41) so that when said sliders (70), (70') lie at the minimum distance from the fixed supports (72), all the pairs of X-shaped bare (82-83), (84-85), (123-124), (134-135),(120-120') are standing practically vertical and therefore the rectangular components (91-92) also stand practically vertical, one superimposed over another, leaving substantially free the loading volume (11) while, by drawing the rectangular components (91-92) outwards, the pairs of X-shaped bars (82-83), (84-85), (123-124), (134-135), (120-120') will gradually become inclined until they reach a practically horizontal position and, when the movement is completed, the rectangular components (91), (92) will be lying horizontally one against another resting on the guide rods (40), (41), thus forming a practically continuous shelf (130) of the shelving.

2. Shelving according to claim 1, characterized in that the guide rods (40-41) of the parallelogram devices (80- 81) are supported at their two ends by two pairs of uprights (13-14) each coinciding with a corner of said shelving (12), said rods (40-41) being able to translate vertically guided by two columns (19-20) placed inside the uprights (13-14), it being possible to lock said rods (40-41) in position by means of horizontal closed slots at their ends within which slots a pin (60) can translate from a point nearer to the uprights (13-14), and said pin can be inserted in open, upwardly-inclined slots (32), (33) in said uprights (13-14), to an inward position on the rods at which point said pin (60) is released from said open slots (32), (33), it being thus possible to move the shelves to another height corresponding to the open slots (32), (33) made one above another in the uprights (13), (14) to which reference is made.

3. Shelving according to claim 1, characterized in that one of the longitudinal sides of each rectangular component (90), (91) of the shelves (130) is made practically in the form of a channel (95) while the other side is made practically in the form of a tongue (94), the distance between the channel (95) and the tongue (94) being such that when the rectangular components (90), (91) lie horizontally, the tongue (94) of one component (90) penetrates into the channel (95) of the adjacent component (91) forming a groove-and-tongue joint.

4. Shelving according to claim 1, characterized in that on each of the guide rods (40), (41) there is an intermediate slider (71) on which articulate the lower ends (143), (144) of one (135), (120) of the bars (134), (135), and (120), (120') of two X-shaped pairs of the parallelogram devices (80), (81), one upstream and the other downstream of said intermediate slider (71) so that, by releasing the upper articulations (133) of said two pairs (134-135) and (120-120'), it is possible to obtain the horizontal loading position of the rectangular components (90), (91) upstream of said intermediate slider (71) and the vertical out-of-use position of the rectangular components (90), (91) downstream, and therefore creation of a free volume in place of about half of the shelf, adapting said shelf to the quantity and nature of the goods and facilitating access for loading and/or unloading the upper and lower shelves.

## Patentansprüche

1. Lagerregal (12) speziell für Ladekraftfahrzeuge (10), mit regulierbaren Ablagen (130), die aus einer Reihe von rechtwinkligen Bauteilen (91), (92) bestehen, welche in Längsrichtung aneinandergereiht sind, gekennzeichnet durch den Umstand, daß die besagten Bauteile (91), (92) an ihren beiden Enden von zwei im Parallelogramm angeordneten Vorrichtungen (80), (81) getragen werden, welche aus einer Reihe von quergekreuzten Stangenpaaren (82)-(83), (123-124), (134-135) bestehen, die beim mittigen Schnittpunkt Gelenke (90), (90') aufweisen sowie auch an ihren Enden Gelenke (86), (87) zur Verbindung mit den Enden der quergekreuzten Stangen (84-85), (120-120') des anliegenden Stangenpaars, wobei jedes rechtwinklige Bauteil (91), (92) mit einer (83), (85), (120), (121), (122), (123) der beiden zueinander parallelen Einzelstangen jedes Stangenpaars verbunden ist, wobei das untere Ende der äußeren Stange (82) des ersten quergekreuzten Stangenpaars (82)-(83) einer jeden der beiden im Parallelogramm angeordneten Vorrichtungen (80-81) gelenkig auf einem Läufer (70), (70') gelagert ist, welcher frei auf einem waagerechten Führungsstab (40), (41) zu gleiten vermag, während das untere Ende der zweiten Stange (89) des inneren quergekreuzten Stangenpaars derselben Vorrichtungen (80), (81) gelenkig an einer unbeweglichen Halterung (72) befestigt ist, die mit dem besagten Führungsstab (40), (41) verbunden ist, sodaß sich bei Anordnung der besagten Läufer (70), (70') im geringstmöglichen Abstand von den unbeweglichen Halterungen (72) sämtliche quergekreuzten Stangenpaare (82-83, 84-85, 123-124, 134-135, 120, 120') praktisch in senkrechter Stellung befinden und folglich auch sämtliche rechtwinkligen Bauteile (91-92) in praktisch senkrechter Stellung übereinanderliegend sind, wobei das Pegaliade-volumen (11) im wesentlichen freigehalten wird, während sich bei Zug der rechtwinkligen Bauteile (91, 92) nach außen die quergekreuzten Stangenpaare (82-83, 84-85, 123-124, 134-135, 120-120') immer mehr neigen, bis sie praktisch die waagerechte Stellung erreichen und die rechtwinkligen Bauteile (91), (92) zum Abschluß dieses Bewegungsablaufs in waagerechter Stellung nebeneinander auf den Führungsstäben (40), (41) aufliegen und eine praktisch lückenlose Regalablagefläche (130) bilden.

2. Lagerregal wie unter Patentanspruch 1) beschrieben, gekennzeichnet durch den Umstand, daß die Führungsstäbe (40), (41) der im Parallelogramm angeordneten Vorrichtungen (80-81) an ihren beiden Enden von zwei Paaren (13-14) von Ständern getragen werden, die jeweils mit einer Ecke des hier behandelten Regals (12) übereinstimmen, wobei eine senkrechte Versetzung der besagten Stäbe (40-41) möglich ist, die durch zwei im Inneren der Ständer (13-14) befindliche Tragsäulen (19-20) geführt wird, wobei die besagten Stäbe (40-41) blockiert werden können mittels an ihren Enden angebrachter geschlossener Ösen, in welche ein Sperrzapfen (60) aus einer nahe bei den Ständern (13), (14) gelegenen Position eingeführt werden kann, die seine Einführung in die Ösen (32), (33) ermöglicht, wenn diese geöffnet und zur Oberseite der besagten Ständer (13), (14) hin geneigt sind, wodurch es möglich ist, die Regalablagen von einer der der Reihe von geöffneten und übereinander auf den hier behandelten Ständern (13), (14) vorbereiteten Ösen (32), (33) entsprechenden Höhenpositionen zur anderen zu versetzen.

3. Lagerregal wie unter Patentanspruch 1) beschrieben, gekennzeichnet durch den Umstand, daß eine der Längsseiten eines jeden rechtwinkligen Bauteils (90), (91) der Ablagen (130) praktisch eine kanalartige Form (95) aufweist, während die andere Längsseite praktisch eine zungenartige Form (94) aufweist, wobei der Abstand zwischen dem Kanalstück (95) und dem Zungenstück (94) so bemessen ist, daß bei waagerechter Anordnung der rechtwinkligen Bauteile (90), (91) das Zungenstück (94) vor einem (90) der Bauteile in das Kanalstück (95) des anliegenden Bauteils (91) eintritt und so eine Klemm-Verbindung schafft.

4. Lagerregal wie unter Patentanspruch. 1) beschrieben, gekennzeichnet durch den Umstand, daß jeder der beiden Führungsstäbe (40), (41) einen Mittelläufer aufweist (71), an welchem die unteren Enden (143), (144) einer (135), (120) der Stangen (134), (135) und (120), (120') von zwei quergekreuzten Stangenpaaren der im Parallelogramm angeordneten Vorrichtungen (80), (81) gelenkig angebracht sind, und zwar eines vor und eines nach dem besagten Mittelläufer (71), was dazu dient, daß bei Auslösung der oberen Gelenke (133) der besagten beiden Paare (134-135) und (120-120') die Positionierung in der waagerechten Beladestellung der rechtwinkligen Bauteile (90), (91) vor dem besagten Mittelläufer (71) gewährleistet wird, sowie, im Falle der Nicht-Benutzung, die senkrechte Stellung der rechtwinkligen Bauteile (90), (91) nach selbigem, wodurch ein freies Volumen anstelle von praktisch der Hälfte der Ablage geschaffen wird, selbige Ablage sich an Menge und Art der gelagerten Artikel anpassen läßt und der Zugang sowie die Beladung bzw. Entladung von den oberen und unteren Regalablagen erleichtert wird.

## Revendications

1. Rayonnage (12) principalement pour véhicules automobiles (10) de chargement, avec étagères (130) réglables obtenues par une série de composants (91) (92) rectangulaires accolés dans le sens de la longueur, caractérisé par le fait que ces composants (91) (92) sont supportés à leurs deux extrémités par deux dispositifs (80) (81) en parallèlogramme, obtenus au moyen d'une série de couples de barreaux (82-83), (123-124), (134-135), en "X" avec une articulation (90) au centre à leur point de rencontre, et des articulations (86), (87) à l'extrémité avec celles des barreaux (84-85), (120-120') en "X" du couple adjacent, chaque composant (91), (92) rectangulaire étant solidaire d'un (83), (85), (120), (121), (122), (123) des deux barreaux, réciproquement parallèles de chaque couple, l'extrémité inférieure du barreau (82) extérieur du premier couple (82)-(83) en "X" de chacun des deux dispositifs (80-81) en parallèlogramme étant articulée sur un curseur (70), (70') libre de coulisser le long d'une tige (40), (41) de guidage horizontale, tandis que l'extrémité inférieure du deuxième barreau (89) du couple plus intérieur en "X" des dispositifs (80), (81) est articulée sur un support (72) fixe, solidaire de cette tige (40), (41') de guidage, de sorte que, lorsque les curseurs (70), (70') sont situés à la distance la plus réduite des supports (72) fixes, tous les couples de barreaux (82-83, 84-85, 123-124, 134-135, 120-120') en "X" se trouvent placés à peu près dans une position verticale, et de ce fait même tous les composants (91-92) rectangulaires sont placés à peu près dans une position verticale l'un au-dessus de l'autre en laissant pratiquement libre le volume (11) de chargement, alors que, en tirant les composants (91, 92) rectangulaires vers l'extérieur, les couples de barreaux (82-83, 84-85, 123-124, 134-135, 120-120′) en "X" s'inclineront au fur et à mesure, jusqu'à arriver à une position presque horizontale et, à la fin du mouvement, les composants (91), (92) rectangulaires se trouveront disposés dans une position horizontale l'un près de l'autre, posés sur les tiges (40), (41) de guidage, réalisant ainsi, presque sans solution de continuité, une étagère (130) du rayonnage.

2. Rayonnage, conforme à celui de la revendication 1), caractérisé par le fait que les tiges (40-41) de guidage des dispositifs (80-81) en parallèlogramme sont supportées à leurs deux extrémités par deux couples (13-14) de montants coïncidant chacun avec un angle du rayonnage (12) dont il s'agit, la translation verticale de ces tiges (40-41) guidée par deux colonnettes (19-20) situées à l'intérieur des montants (13-14) étant possible, de même que le blocage de ces tiges (40-41) au moyen d'oeillets horizontaux fermés à leurs extrémités dans lesquels un petit pivot (60) peut se déplacer de la position la plus proche des montants (13-14) qui permet son introduction dans les oeillets (32), (33) ouverts inclinés vers le haut de ces montants (13), (14) à une position vers l'intérieur des tiges correspondant au dégagement du petit pivot (60) de ces oeillets (32), (33) ouverts, ce qui permet de déplacer les étagères d'une hauteur à l'autre parmi celles qui correspondent à la série d'oeillets (32) (33) ouverts et prédisposés, l'un au-dessus de l'autre, sur les montants (13), (14) dont il s'agit.

3. Rayonnage, conforme à celui de la revendication 1), caractérisé par le fait que l'un des côtés longitudinaux de chaque composant (90), (91) rectangulaire des étagères (130) se présente presque sous la forme d'un canal (95) tandis que l'autre côté se présente presque sous la forme d'une languette (94), la distance entre le canal (95) et la languette (94) étant calculée de manière que lorsque les composants (90), (91) se placent horizontalement, la languette (94) de l'un (90) d'eux pénètre dans le canal (95) du composant (91) adjacent, réalisant ainsi une connexion à emboîtement.

4. Rayonnage, conforme à celui de la revendication 1), caractérisé par le fait que chacune des tiges (40), (41) de guidage présente un curseur (71) intermédiaire sur lequel sont articulées les extrémités (143), (144) inférieures de l'un (135), (120) des barreaux (134), (135) et (120) (120′) de deux couples en "X" des dispositifs (80), (81) en parallèlogramme, l'un en amont et l'autre en aval de ce curseur (71) intermédiaire en vue de permettre, en décrochant les articulations (133) supérieures de ces deux couples (134-135) et (120-120′) le positionnement dans l'état de chargement, horizontal, des composants (90), (91) rectangulaires en amont de ce curseur (71) intermédiaire et l'état de hors d'usage vertical des composants (90), (91) rectangulaires en aval, et par suite la création d'un volume libre représentant à peu près la moitié de l'étagère et adaptant cette étagère à la quantité et à la nature des marchandises, et facilitant l'accès ainsi que le chargement/déchargement sur des étagères supérieures et inférieures.

fig. 1

EP 0 401 214 B1

fig. 2

EP 0 401 214 B1

fig. 3

EP 0 401 214 B1

fig. 4

11

fig.5

EP 0 401 214 B1

fig. 6

fig. 7